# EUROPÄISCHE PATENTSCHRIFT

(11) **EP 0 393 217 B1**
(45) Veröffentlichungstag und Bekanntmachung des Hinweises auf die Patenterteilung: **16.06.1993**
(21) Anmeldenummer: 89106963.5
(22) Anmeldetag: 19.04.1989
(51) Int. Cl.: A47B 91/00

(54) **Standfuss**
Supporting foot
Pied d'appui

(43) Veröffentlichungstag der Anmeldung: 24.10.1990
(73) Patentinhaber: EJOT Adolf Böhl GmbH & Co. KG, D-57319 Bad Berleburg (DE)
(72) Erfinder: Riecke, Ernst-Hermann, Dipl. Ing., D-5920 Bad Berleburg - Berghausen (DE); Schroeder, Joachim, Dipl. Ing., D-5920 Bad Berleburg-Wemlighausen (DE)
(74) Vertreter: Missling, Arne, Dipl.-Ing.

(56) Entgegenhaltungen:
- DE-A- 1 585 561
- DE-U- 8 014 361
- GB-A- 1 424 135
- US-A- 2 327 050

## Beschreibung

Die Erfindung bezieht sich auf einen Standfuß, insbesondere für Haushalt-Waschmaschinen, mit einem mit einem Gewinde versehenen Schaft und einem endseitig an diesem ausgebildeten, von einer Kunststoffummantelung umschlossenen Kopf.

Ein Standfuß der eingangs genannten Art ist aus der DE-PS 28 20 481 bekannt und dient beispielsweise zur Lagerung einer Haushaltsmaschine, insbesondere einer Waschmaschine.

Standfüße für Waschmaschinen müssen zum einen in der Lage sein, schwingungsdämpfend zu wirken, um die Übertragung der beim Waschen oder Schleudern auftretenden Kräfte auf den Boden entsprechend zu beeinflussen. Weiterhin müssen derartige Standfüße eine ausreichende Festigkeit aufweisen, um auch bei einer hohen Belastung die Kräfte sicher übertragen zu können. Zudem besteht bei derartigen Geräten, wie beispielsweise Waschmaschinen, die Gefahr, daß die Schwingungen des Gerätes dazu führen, daß dieses auf dem Boden wandert, da die Reibung zwischen dem Standfuß und der Bodenoberfläche nicht ausreichend groß ist.

Aus dem DE-GM 80 14 361 ist es bekannt, die Bodenhaftung bei Standfüßen zu verbessern, indem bodenseitig ein Saugnapf an der Kunststoffummantelung vorgesehen ist. Eine solche, bei leichten Küchengeräten häufig angewendete Maßnahme ist für den allgemeinen Gebrauch bei derartigen Standfüßen, die wie bei Waschmaschinen enorme Kräfte und Momente neutralisieren müssen, ungeeignet; ein so ausgerüsteter Standfuß unter einer Waschmaschine wäre nach kurzer Zeit nicht mehr funktionsfähig; deshalb ist auch die vorbekannte Ausführung ausdrücklich auf kleine Auflagelasten begrenzt. Ein wesentlicher Mangel der vorbekannten Ausführungen besteht auch darin, daß sich die Kunststoffummantelung an dem Kopf des Standfußes relativ frei drehen kann. Infolge von Schwingungen kommt es aber, beispielsweise bei Waschmaschinen, häufig vor, daß auch Drehmomente wechselnder Richtung wirksam werden, die bei freier Beweglichkeit zwischen Kunststoffummantelung und Kopf ebenfalls zur schnellen Zerstörung des Standfußes führen. Es ist zwar aus der DE-OS 15 85 561 bereits bekannt, daß die Kunststoffummantelung den Kopf an einigen Ausnehmungen durchdringt und die beiderseits des Kopfes befindlichen Kunststoff-Partien miteinander verbindet, so daß die Kunststoffummantelung und der Kopf auch gegenüber axialen Drehmomenten formschlüssig miteinander verbunden sind. Eine solche Konstruktion hat aber mehrere Nachteile. So muß bei zunehmendem Verschleiß des Kunststoffes der gesamte Standfuß weggeworfen und ersetzt werden. Außerdem ist die Anbringung der erforderlichen Ausnehmungen an dem Kopf auf dünne Platten beschränkt, wenn der Aufwand dafür in Grenzen gehalten werden soll, wobei aber außerdem vor allem bei tiefen Ausnehmungen eine homogene Kunststoffummantelung schwer zu erreichen wäre und Störstellen in Kauf genommen werden müßten. Die gleichen Nachteile hat auch die eingangs beschriebene Ausführung gemäß DE-PS 28 20 481, wobei hier noch ein zusätzliches Bauteil (Käfig) erforderlich ist.

Der Erfindung liegt die Aufgabe zugrunde, einen Standfuß der eingangs genannten Art zu schaffen, welcher bei einfachem Aufbau und kostengünstiger Herstellbarkeit einen sicheren Stand eines Gerätes auch bei Auftreten von Schwingungen und Vibrationen sicherstellt.

Die Erfindung wird dadurch gelöst, daß an der Standfläche an der Kunststoffummantelung mehrere Noppen ausgebildet sind, deren Stirnflächen jeweils mit einer kalottenförmigen Ausnehmung versehen sind, und daß der Kopf zumindest an seiner freien Stirnfläche mit zumindest einer Rippe versehen ist.

Der erfindungsgemäße Standfuß zeichnet sich durch eine Reihe erheblicher Vorteile aus. Durch die mehreren Noppen kann zunächst eine exakte Anpassung des Standfußes auch an eine unebene Oberfläche erfolgen, da die Noppen, bedingt durch die Elastizität des Kunststoffes, jeweils separat verformbar sind. Die kalottenförmige Ausnehmung bewirkt ein Ansaugen oder Festsaugen auf eine glatten Aufstandsfläche, so daß zusätzlich zu der Reibung, welche zwischen den Noppen und der Aufstandsfläche herrscht, Haltekräfte, bedingt durch die Ansaugwirkung der Noppen, auftreten. Ein weiterer Vorteil des Standfußes besteht darin, daß dieser nicht nur eine Anpassunng an eine nichtebene Aufstandsfläche ermöglicht, sondern, bedingt durch die Verformbarkeit der Noppen, auch die Möglichkeit schafft, einen sicheren Stand auf einer abgeschrägten Aufstandsfläche zu ermöglichen. Dabei werden die einzelnen Noppen in unterschiedlichem Maße verformt, insgesamt ruht jedoch im wesentlichen die gesamte Standfläche des Standfußes auf der Aufstandsfläche oder dem Boden. Ungleichmäßige Belastungen, welche beispielsweise bei rein metallischen Standfüßen oder glatten Kunststoff-Füßen auftreten können und welche im ungünstigen Fall eine Verformung des Schaftes nach sich ziehen würden, werden dabei vermieden. Durch die zapfenartig vorstehenden Noppen bietet der Standfuß die Möglichkeit, formschlüssig mit Oberflächenunebenheiten, beispielsweise Fugen zwischen Bodenfliesen, in Eingriff gebracht zu werden. Auch dies führt zu einer erheblichen Steigerung der seitlichen Rutschfestigkeit des Standfußes, insbesondere bei nassem Untergrund. Da sich die Noppen über einen bestimmten Betrag von der Standfläche des Standfußes aus erstrecken, gewährleisten die Noppen auch bei Verwendung eines härteren, weniger dämpfenden Kunststoffmaterials eine ausreichende Schwingungsdämpfung, da auch bei einem dünnen Querschnitt der Kunststoffummantelung die Gesamtlänge der Noppen eine ausreichende Materialdicke sicherstellt. Bei dem erfindungsgemäßen Standfuß ist der Kopf mit der Kunststoffummantelung umgeben. Um eine Verdrehung oder Verschiebung des Kopfes relativ zu der Kunststoffummantelung zu verhindern und um sicherzustellen, daß der Kopf fest mit der Kunststoffummantelung verbunden ist, ist der Kopf zumindest an seiner freien Stirnfläche mit zumindest einer Rippe versehen. Diese bewirkt eine formschlüssige Verbindung zwischen der Kunststoffummantelung und dem Material des Kopfes.

In einer bevorzugten Ausführungsform der Erfindung ist vorgesehen, daß die Noppen einen kreisförmigen Querschnitt aufweisen. Dies erweist sich zum einen aus herstellungstechnischen Gründen als besonders günstig, zum anderen wird die Bruchgefahr der Noppen reduziert.

Die Ausnehmung an der Stirnfläche der Noppe, welche im wesentlichen kalottenförmig ausgebildet ist, ist bevorzugterweise konkav, in Form einer Kugelkappe, ausgebildet.

Der Rand an der Stirnfläche jeder Noppe ist bevorzugterweise mit einer scharfen Kante versehen, um eine möglichst feste Verbindung mit der Bodenfläche zu gewährleisten. Die scharfkantige Ausbildung des Randes erleichtert bei weicheren Böden, beispielsweise bei Bodenbelägen, das Eindringen der Noppen, um eine formschlüssige Verbindung und Rutschsicherung zu bewirken.

Es erweist sich als besonders vorteilhaft, wenn mehrere radiale Rippen vorgesehen sind, welche zur Kraftübertragung in verschiedensten Richtungen geeignet sind, so daß die Kunststoffummantelung bei den auftretenden Belastungen nicht relativ zu dem Kopf bewegt oder verschoben werden kann.

Um den erfindungsgemäßen Standfuß besonders kostengünstig herstellen zu können und um eine feste Verankerung an der Kunststoffummantelung sicherzustellen, erweist es sich als besonders günstig, wenn der Kopf plattenförmig ausgebildet ist und beidseitig mit Rippen versehen ist.

Bevorzugterweise ist der Kopf des Standfußes rund ausgestaltet, da dieser dann als einfaches Drehteil hergestellt werden kann. Die Kunststoffummantelung weist bevorzugterweise eine vieleckige Grundform auf, beispielsweise eine sechseckige Form, um die Möglichkeit zu bieten, den gesamten Standfuß unter Verwendung eines Werkzeugs, beispielsweise eines Schraubenschlüssels, relativ zu dem Gerät zu verdrehen, um auf diese Weise die Höhe des Standfußes einzustellen.

In einer weiteren Ausgestaltung des erfindungsgemäßen Standfußes ist es auch möglich, die Noppen mit einem dreieckigen Querschnitt zu versehen, in deren Mitte die Ausnehmung angeordnet ist. Es ist auch möglich, die Noppen in Form von Rippen auszubilden, welche die Ausnehmung umschließen. Die Noppen sind in diesem Falle im wesentlichen auf den Randbereich reduziert. Es kann sich als günstig erweisen, die Rippen, welche die Noppen bilden, in Form gleichseitiger Dreiecke auszubilden, welche wabenartig angeordnet sind.

Um auch bei größeren Vibrationen eine sichere Abstützung des Gerätes sicherzustellen, kann es sich als günstig erweisen, im Bereich des Gewindes eine Verdrehsicherung auszubilden, welche ein Verdrehen der Standfüße unter den auftretenden Belastungen vermeidet. Dabei kann es sich als besonders günstig erweisen, wenn im Bereich des Schaftes zumindest ein das Gewinde durchdringendes, sich in radialer Richtung erstreckendes Sicherungselement angeordnet ist. Dieses gelangt somit in die Gewindegänge und führt dort zu einem erhöhten Reibungskoeffizienten, durch welchen ein unbeabsichtigtes Verschrauben des Standfußes verhindert wird. Besonders günstig ist es, wenn das Sicherungselement in Form eines den Schaft zumindest zum Teil radial durchdringenden Kunststoffbolzens ausgebildet ist.

Die Herstellung des erfindungsgemäßen Standfußes kann erheblich vereinfacht werden, wenn dieser mit einer zentrischen Ausnehmung versehen ist, welche mit mehreren radialen Ausnehmungen in Verbindung steht und zumindest am Kopf zur Standfläche hin offen ist. In diesem Falle können bei der Aufbringung der Kunststoffummantelung sowohl die zentrische Ausnehmung als auch die radialen Ausnehmungen mit Kunststoff gefüllt werden, wobei in einem Arbeitsgang gleichzeitig die Kunststoffummantelung im Bereich des Standfußes als auch die Verdrehsicherung ausgebildet wird. Es sind dann sowohl in der zentrischen Ausnehmung als auch in den radialen Ausnehmungen jeweils Kunststoffbolzen angeordnet.

In einer besonders günstigen Ausbildung der Erfindung ist vorgesehen, daß sowohl die Kunststoffummantelung als auch die Kunststoffbolzen aus einem elastomeren Material gefertigt sind. Der Kunststoff-Schraubenbolzen besteht vorteilhaft aus einem "härteren" Kunststoff. Das elastomere Material bietet eine ausreichende Elastizität und absorbiert die Schwingungen. Der "härtere" Kunststoff des Schraubenbolzens ist andererseits steif genug um die Kräfte zu übertragen, so daß die Gefahr von Brüchen verhindert wird.

Bei dem erfindungsgemäßen Standfuß ist die Möglichkeit geschaffen, die gesamte Aufstandsfläche erheblich zu vergrößern, da die Gefahr eines Abknickens des Kopfes relativ zu dem Schaft durch die Elastizität der Noppen vermieden wird.

Im folgenden wird die Erfindung anhand eines Ausführungsbeispiels in Verbindung mit der Zeichnung beschrieben. Dabei zeigt:
- Fig. 1: eine Schnittansicht eines Ausführungsbeispiels des erfindungsgemäßen Standfußes;
- Fig. 2: eine Draufsicht auf das in Fig. 1 gezeigte Ausführungsbeispiel;
- Fig. 3: eine Draufsicht, in Richtung des Pfeils A, auf den Kopf des erfindungsgemäßen Standfußes;
- Fig. 4: eine Ansicht ähnlich Fig. 2;
- Fig. 5: eine Unteransicht, ähnlich Fig. 2, eines weiteren Ausführungsbeispiels, bei welchem die Noppen dreiecksförmig ausgebildet sind, und
- Fig. 6: eine Schnittansicht durch ein weiteres Ausführungsbeispiel des erfindungsgemäßen Standfußes.

Der erfindungsgemäße Standfuß umfaßt einen mit einem Außengewinde versehenen Schaft 1, welcher fest mit einem kreisplattenförmigen Kopf 2 verbunden ist. Der Kopf 2 kann einstückig mit dem Schaft 1 ausgebildet sein, es ist jedoch auch möglich, diesen an dem Schaft 1 anzuschrauben oder mit diesem zu verschweißen.

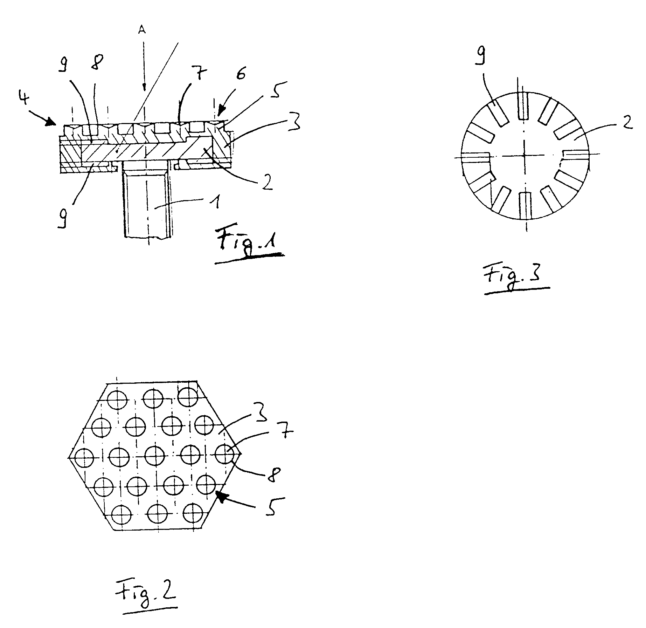

Wie aus den Fig. 1 und 3 ersichtlich, weist der Kopf 2 an seiner Ober- und Unterseite jeweils eine Vielzahl von radial angeordneten Rippen 9 auf, welche eine formschlüssige Verbindung mit einer Kunststoffummantelung 3 sicherstellen, welche im wesentlichen den gesamten Kopf 2 umgibt.

Die Kunststoffummantelung weist, wie in Fig. 2 dargestellt, einen im wesentlichen sechseckigen Querschnitt auf, so daß es möglich ist, die Kunststoffummantelung zusammen mit dem Kopf 2 und dem Schaft 1 relativ zu einem nicht dargestellten Gerät zu verdrehen.

An der Standfläche 4 des Standfußes sind erfindungsgemäß mehrere Noppen 5 ausgebildet, welche, wie in Fig. 1 ersichtlich ist, einen im wesentlichen zylindrischen Aufbau aufweisen, und deren Stirnfläche 6 mit einer kalottenförmigen Ausnehmung 7 versehen ist.

Da die Kunststoffummantelung 3 aus einem elastisch verformbaren, schwingungsdämpfenden Kunststoff gefertigt ist, sind auch die Noppen 5, welche einstückig mit der Kunststoffummantelung 3 hergestellt sind, elastisch verformbar und können sich bei Aufstellung des Standfußes in besonders einfacher Weise an Bodenunebenheiten etc. anpassen.

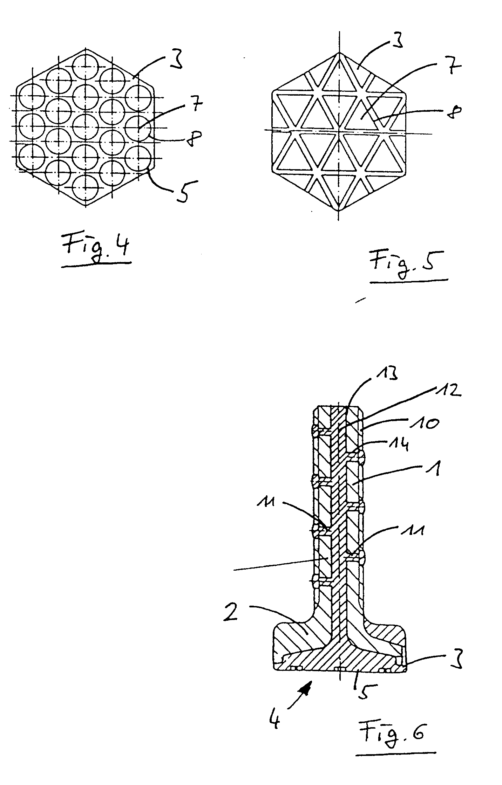

In Fig. 4 ist eine Unteransicht, ähnlich Fig. 2 dargestellt, bei welcher, im Vergleich zu dem in Fig. 2 gezeigten Ausführungsbeispiel die Noppen einen größeren Durchmesser aufweisen. In Fig. 5 ist ein weiteres Ausführungsbeispiel dargestellt, bei welchem die Noppen im wesentlichen dreiecksförmig ausgebildet sind und im wesentlichen auf ihren Randbereich oder Rippenbereich reduziert sind, so daß die zentrische Ausnehmung 7 ebenfalls im wesentlichen dreiecksförmig ausgebildet ist. Die dreieckige Ausgestaltung der Rippen ist insbesondere für nasse Böden besonders gut geeignet, da die Ausnehmungen 7 mit einem sehr großen Volumen versehen sind.

Die Fig. 6 zeigt im Längsschnitt, ähnlich Fig. 1, ein weiteres Ausführungsbeispiel des erfindungsgemäßen Standfußes. Bei diesem Ausführungsbeispiel weist der mit einem Gewinde 10 versehene Schaft 1 eine zentrische Ausnehmung 13 sowie mehrere von dieser zentrischen Ausnehmung 13 ausgehende Ausnehmungen 14 auf. Die zentrische Ausnehmung 13 ist insbesondere zur Standfläche 4 des Fußes 2 hin offen, so daß das Material für die Ummantelung 3 in die zentrische Ausnehmung 13 und die radialen Ausnehmungen 14 eindringen kann. In dem in Fig. 6 gezeigten, fertigen Zustand ist in der zentrischen Ausnehmung 13 ein zentrischer Kunststoffbolzen 12 angeordnet, welcher mit der Kunststoffummantelung 3 einstückig ausgebildet ist. Weiterhin ist der Kunststoffbolzen 12 einstückig mit mehreren radialen Kunststoffbolzen 11 ausgebildet, welche sich bis in das Gewinde 10 erstrecken und somit beim Einschrauben des Schaftes 1 in ein Innengewinde einer metallischen Halterung als Verdrehsicherung wirken. Bei diesem Ausführungsbeispiel erweist es sich als besonders günstig, daß eine zusätzliche Verdrehsicherung vorgesehen ist, welche jedoch nicht die Einstellbarkeit des Standfußes beeinflußt.

An der Stirnfläche 6 weisen die Noppen 5 einen scharfkantigen Rand 8 auf, welcher, wie in Fig. 2 ersichtlich ist, kreisförmig ausgebildet ist und dazu dient, den Standfuß formschlüssig mit einer Aufstandsfläche, deren Material weicher ist, als das Material der Kunststoffummantelung, zu verbinden.

Der erfindungsgemäße Standfuß weist zum einen, bedingt durch die Kunststoffummantelung, eine ausreichende Dämpfung von Vibrationen auf, andererseits ist sichergestellt, daß eine Anpassung an Bodenunebenheiten und ähnliches erfolgen kann, wobei die Noppen gleichzeitig eine formschlüssige Verbindung mit Bodenunebenheiten ermöglichen.

## Patentansprüche

1. Standfuß, insbesondere für Haushalt-Waschmaschinen, mit einem mit einem Gewinde versehenen Schaft (1) und einem endseitig an diesem ausgebildeten, von einer Kunststoffummantelung (3) umschlossenen Kopf (2), dadurch gekennzeichnet, daß an der Standfläche (4) des Standfußes an der Kunststoffummantelung (3) mehrere Noppen (5) ausgebildet sind, deren Stirnflächen (6) jeweils mit einer kalottenförmigen Ausnehmung (7) versehen sind, und daß der Kopf (2) zumindest an seiner freien Stirnfläche mit zumindest einer Rippe (9) versehen ist.

2. Standfuß nach Anspruch 1, dadurch gekennzeichnet, daß die Noppen (5) einen kreisförmigen Querschnitt aufweisen.

3. Standfuß nach Anspruch 1, dadurch gekennzeichnet, daß die Noppen (5) einen dreieckigen Querschnitt aufweisen.

4. Standfuß nach einem der Ansprüche 1 bis 3, dadurch gekennzeichnet, daß die Noppen (5) an ihren Stirnflächen (6) mit einem scharfkantigen Rand (8) versehen sind.

5. Standfuß nach einem der Ansprüche 1 bis 4, dadurch gekennzeichnet, daß die Noppen (5) in Form von Rippen ausgebildet sind, welche die Ausnehmung (7) umschließen.

6. Standfuß nach Anspruch 5, dadurch gekennzeichnet, daß die Rippen in Form gleichseitiger Dreiecke ausgebildet sind, welche wabenartig angeordnet sind.

7. Standfuß nach einem der Ansprüche 1 bis 6, dadurch gekennzeichnet, daß mehrere radiale Rippen (9) vorgesehen sind.

8. Standfuß nach Anspruch 7, dadurch gekennzeichnet, daß der Kopf (2) plattenförmig ausgebildet ist und beidseitig mit Rippen (9) versehen ist.

9. Standfuß nach einem der Ansprüche 1 bis 8, dadurch gekennzeichnet, daß der Kopf (2) rund ausgebildet ist.

10. Standfuß nach einem der Ansprüche 1 bis 9, dadurch gekennzeichnet, daß die Kunststoffummantelung (3) eine vieleckige Grundform aufweist.

11. Standfuß nach einem der Ansprüche 1 bis 10, dadurch gekennzeichnet, daß im Bereich des Schaftes (1) zumindest ein das Gewinde (10) durchdringendes, sich in radialer Richtung erstreckendes Sicherheitselement angeordnet ist.

12. Standfuß nach Anspruch 11, dadurch gekennzeichnet, daß das Sicherungselement in Form eines den Schaft (1) zumindest zum Teil radial durchdringenden Kunststoffbolzens (11) ausgebildet ist.

13. Standfuß nach Anspruch 11 oder 12, dadurch gekennzeichnet, daß der Schaft (1) mit einer zentrischen Ausnehmung versehen ist, welche mit mehreren radialen Ausnehmungen in Verbindung steht und welche zumindest am Kopf (2) zur Standfläche (4) hin offen ist, und daß in der zentrischen Ausnehmung und den radialen Ausnehmungen einstückig mit der Kunststoffummantelung (3) ausgebildete Kunststoffbolzen (11,12) angeordnet sind.

14. Standfuß nach Anspruch 13, dadurch gekennzeichnet, daß die Kunststoffummantelung (3) und die Kunststoffbolzen (11,12) aus einem elastomeren Material gefertigt sind.

## Claims

1. A supporting foot, in particular for domestic washing machines, having a shaft (1) provided with a thread and having a head (2) formed on the end of the shaft (1) and surrounded by a plastics casing (3), characterised in that several protuberances (5) are formed on the supporting surface (4) of the supporting foot on the plastics casing (3), the end surfaces (6) of the protuberances (5) each being provided with a spherical recess (7), and in that the head (2) is provided with at least one rib (9) at least on its free end surface.

2. A supporting foot according to claim 1, characterised in that the protuberances (5) are of circular cross-section.

3. A supporting foot according to claim 1, characterised in that the protuberances (5) are of triangular cross-section.

4. A supporting foot according to any one of claims 1 to 3, characterised in that the protuberances (5) are provided with a sharp edge (8) on their end surfaces (6).

5. A supporting foot according to any one of claims 1 to 4, characterised in that the protuberances (5) are designed in the form of ribs which surround the recess (7).

6. A supporting foot according to claim 5, characterised in that the ribs are designed in the form of equilateral triangles which are arranged in the manner of a honeycomb.

7. A supporting foot according to any one of claims 1 to 6, characterised in that several radial ribs (9) are provided.

8. A supporting foot according to claim 7, characterised in that the head (2) is plate-shaped and is provided on both sides with ribs (9).

9. A supporting foot according to any one of claims 1 to 8, characterised in that the head (2) is circular.

10. A supporting foot according to any one of claims 1 to 9, characterised in that the basic shape of the plastics casing (3) is polygonal.

11. A supporting foot according to any one of claims 1 to 10, characterised in that at least one safety element penetrating the thread (10) and extending in the radial direction is arranged in the region of the shaft (1).

12. A supporting foot according to claim 11, characterised in that the safety element is designed in the form of a plastics bolt (11) at least partially penetrating the shaft (1) radially.

13. A supporting foot according to claim 11 or 12, characterised in that the shaft (1) is provided with a central recess which communicates with several radial recesses and which is open in the direction of the supporting surface (4) at least at the head (2), and in that plastics bolts (11, 12) which are formed in one piece with the plastics casing (3) are arranged in the central recess and the radial recesses.

14. A supporting foot according to claim 13, characterised in that the plastics casing (3) and the plastics bolts (11, 12) are manufactured from an elastomeric material.

## Revendications

1. Pied d'appui, notamment pour des machines à laver domestiques, comportant un corps (1) pourvu d'un filetage et une tête (2), configurée à une extrémité du corps et entourée d'un enrobage en matière plastique (3), caractérisé en ce que plusieurs bossages (5) sont formés sur l'enrobage en matière plastique (3), sur la face d'appui (4) dudit pied d'appui, la face frontale (6) de chaque bossage (5) présentant un évidement (7) en forme de calotte, et en ce que la tête (2) est dotée, au moins sur sa face frontale libre, d'au moins une nervure (9).

2. Pied d'appui selon la revendication 1, caractérisé en ce que les bossages (5) présentent une section circulaire.

3. Pied d'appui selon la revendication 1, caractérisé en ce que les bossages (5) présentent une section triangulaire.

4. Pied d'appui selon l'une quelconque des revendications 1 à 3, caractérisé en ce que les bossages (5) présentent un bord à angles vifs (8) sur leur face frontale (6).

5. Pied d'appui selon l'une quelconque des revendications 1 à 4, caractérisé en ce que les bossages (5) sont réalisés sous la forme de nervures qui entourent l'évidement (7).

6. Pied d'appui selon la revendication 5, caractérisé en ce que les nervures sont réalisées sous la forme de triangles équilatéraux, qui sont disposés en nid d'abeilles.

7. Pied d'appui selon l'une quelconque des revendications 1 à 6, caractérisé en ce que plusieurs nervures radiales (9) sont prévues.

8. Pied d'appui selon la revendication 7, caractérisé en ce que la tête (2) est réalisée en forme de plaque et est dotée de nervures (9) des deux côtés.

9. Pied d'appui selon l'une quelconque des revendications 1 à 8, caractérisé en ce que la tête (2) est réalisée ronde.

10. Pied d'appui selon l'une quelconque des revendications 1 à 9, caractérisé en ce que l'enrobage en matière plastique (3) présente une forme de base polygonale.

11. Pied d'appui selon l'une quelconque des revendications 1 à 10, caractérisé en ce qu'au moins un élément de blocage, s'étendant en direction radiale et traversant le filetage (10), est disposé dans la région du corps (1).

12. Pied d'appui selon la revendication 11, caractérisé en ce que l'élément de blocage est réalisé sous la forme d'un axe en matière plastique (11), qui traverse au moins en partie radialement le corps (1).

13. Pied d'appui selon la revendication 11 ou 12, caractérisé en ce que le corps (1) présente un évidement central, qui communique avec plusieurs évidements radiaux et est ouvert, au moins au niveau de la tête (1), vers la face d'appui (4), et en ce que des axes en matière plastique (11, 12), solidaires de l'enrobage en matière plastique (3) sont disposés dans l'évidement central et les évidements radiaux.

14. Pied d'appui selon la revendication 13, caractérisé en ce que l'enrobage en matière plastique (3) et les axes en matière plastique (11, 12) sont réalisés en un matériau élastomère.
